(19) Europäisches Patentamt / European Patent Office / Office européen des brevets

(11) **EP 2 579 366 A1**

(12) **EUROPEAN PATENT APPLICATION**

(43) Date of publication:
**10.04.2013 Bulletin 2013/15**

(51) Int Cl.:
**H01M 4/134** *(2010.01)*     **H01M 4/133** *(2010.01)*

(21) Application number: **12187435.8**

(22) Date of filing: **05.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.10.2011 KR 20110101438**

(71) Applicant: **Samsung SDI Co., Ltd.**
**Yongin-si, Gyeonggi-do (KR)**

(72) Inventors:
 • **Yoo, Ha-Na**
  Yongin-si (Gyeonggi-do) (KR)
 • **Kim, Jae-Myung**
  Yongin-si (Gyeonggi-do) (KR)

 • **Lee, So-Ra**
  Yongin-si (Gyeonggi-do) (KR)
 • **Shin, Chang-Su**
  Yongin-si (Gyeonggi-do) (KR)
 • **Do, Ui-Song**
  Yongin-si (Gyeonggi-do) (KR)
 • **Cho, Yu-Jeong**
  Yongin-si (Gyeonggi-do) (KR)
 • **Lee, Su-Kyung**
  Yongin-si (Gyeonggi-do) (KR)
 • **Park, Sang-Eun**
  Yongin-si (Gyeonggi-do) (KR)

(74) Representative: **Santarelli**
 **14 Avenue de la Grande Armée**
 **B.P. 237**
 **75822 Paris Cedex 17 (FR)**

(54) **Negative active material and lithium battery containing the negative active material**

(57)  A negative active material comprising a primary particle, comprising a substantially spherical carbonaceous base material, having a circularity in the range of 0.7 to 1.0; and silicon-based nanowires disposed on the carbonaceous material.

A lithium battery (30) comprising a negative electrode comprising the negative active material.

The negative active material may increase the capacity and cycle lifespan characteristics of the lithium battery (30).

EP 2 579 366 A1

**Description**

**BACKGROUND**

**1. Technical Field**

The present invention, illustrated by one or more embodiments relates to a negative active material and a lithium battery including the negative active material.

**2. Description of the Related Art**

Lithium secondary batteries used in portable electronic devices for information communication, such as PDAs, mobile phones, or notebook computers, electric bicycles, electric vehicles, or the like, have discharge voltages that are at least twice as high as that of conventional batteries. Thus, lithium secondary batteries have high energy density.

Lithium secondary batteries generate electric energy by oxidation and reduction reactions occurring when lithium ions are intercalated into and deintercalated from a positive electrode and a negative electrode. Each of the positive and negative electrodes include an active material that enables intercalation and deintercalation of lithium ions, and an organic electrolytic solution or a polymer electrolytic solution is positioned between the positive electrode and the negative electrode.

Examples of positive active materials for lithium secondary batteries include oxides that include lithium and a transition metal and that have structures enabling intercalation of lithium ions. Examples of such an oxide include lithium cobalt oxide ($LiCoO_2$), lithium nickel oxide ($LiNiO_2$), lithium nickel cobalt manganese oxide ($Li[NiCoMn]O_2$ or $Li[Ni_{1-x-y}Co_xM_y]O_2$), etc.

Examples of negative active materials include carbonaceous base materials and non-carbonaceous base materials which enable intercalation or deintercalation of lithium ions, and studies have been continuously performed on these materials. Examples of carbonaceous base materials include artificial and natural graphite, and hard carbon. An example of a non-carbonaceous base material is Si.

Some non-carbonaceous base materials have high capacity, which can be 10 times greater than that of graphite. However, due to volumetric expansion and contraction during charging and discharging, the capacity retention ratio, charge/discharge efficiency, and lifetime characteristics thereof may be degraded.

**SUMMARY**

One of the objects of the present invention includes a negative active material with improved lifespan characteristics.

One of the objects of the present invention includes a lithium battery including the negative active material.

Additional aspects will be set forth in part in the description which follows and, in part, will be apparent from the description, or may be learned by practice of the disclosed embodiments.

According to the present invention, a negative active material includes a primary particle including: a substantially spherical carbonaceous base material and silicon-based nanowires disposed on the carbonaceous base material, where the circularity of the carbonaceous base material is in the range of about 0.7 to about 1.0.

Particles, as well known from the one skilled in the art, are individualizable parts. They include primary particles and secondary particles. Primary particles are particles that can agglomerate and thus form a secondary particle. Secondary particles do not agglomerate.

According to an embodiment of the present invention, the circularity of the particles of the carbonaceous base material is preferably in the range of about 0.8 to about 1.0, and even more preferably in the range of about 0.9 to about 1.0. "About 1.0" means "1.0" and values "around 1.0" (excluding 1.0).

According to an embodiment of the present invention, the particles of the carbonaceous base material comprise pores therein, and have a porosity thereof is about 5 to about 30% based on a total volume of the carbonaceous base material.

According to an embodiment of the present invention, the carbonaceous base material may include, preferably may consist of, a crystalline carbonaceous material. For example, the crystalline carbonaceous material may include at least one of natural graphite, artificial graphite, expandable graphite, graphene, carbon black, and fullerene soot.

According to an embodiment of the present invention, the average particle diameter of the carbonaceous base material are in the range of about 1 to about 30 $\mu$m.

According to an embodiment of the present invention, the silicon-based nanowires may include at least one of Si, SiOx ($0<x\leq2$), and Si-Z alloys (where Z is an alkali metal, an alkali earth metal, a Group 13 element, a Group 14 element, a Group 15 element, a Group 16 element, a transition metal, a rare earth element, or a combination thereof, and is not Si). According to an embodiment of the present invention, the silicon-based nanowires are Si nanowires.

According to an embodiment of the present invention, the silicon-based nanowires are substantially of cylindrical shape, and have an average diameter of about 10 to about 500 nm, and an average length of about 0.1 to about 100 $\mu$m.

According to an embodiment of the present invention, the silicon-based nanowires may be grown directly on the carbonaceous base material, and the silicon-based nanowires may be grown in the presence or absence of at least one metal catalyst selected from Pt, Fe, Ni, Co, Au, Ag, Cu, Zn, and Cd.

According to an embodiment of the present invention, in the primary particle, an amount of the carbonaceous base material may be about 60 to about 99 wt%, and an amount of the silicon-based nanowires is about 1 to about 40 wt%, based on the total weight of the carbonaceous base material and the silicon-based nanowires.

According to an embodiment of the present invention, the negative active material may further include a carbonaceous particle including at least one of natural graphite, artificial graphite, expandable graphite, graphene, carbon black, fullerene soot, carbon nanotubes, carbon fibers and their mixtures. In this regard, the carbonaceous particle may be in a spherical, planar, fibrous, tubular, and/or powder form.

According to one or more embodiments of the present invention, a lithium battery includes: a negative electrode including the negative active material described above and a binder; a positive electrode facing the negative electrode; and an electrolyte disposed between the negative electrode and the positive electrode.

The negative active material included in the negative electrode is the same as described above.

According to an embodiment of the present invention, the binder may include at least one of polyvinylidenefluoride, polyvinylidenechloride, polybenzimidazole, polyimide, polyvinylacetate, polyacrylonitrile, polyvinylalcohol, carboxymethylcellulose (CMC), starch, hydroxypropylcellulose, regenerated cellulose, polyvinylpyrrolidone, tetrafluoroethylene, polyethylene, polypropylene, polystyrene, polymethylmethacrylate, polyaniline, acrylonitrile-butadiene-styrene, phenol resin, epoxy resin, polyethylene terephthalate, polytetrafluoroethylene, polyphenylsulfide, polyamideimide, polyetherimide, polyethylenesulfone, polyamide, polyacetal, polyphenyleneoxide, polybutylene terephthalate, ethylene-propylene-diene terpolymer (EPDM), sulfonated EPDM, styrene butadiene rubber, fluoride rubber, and their combinations. For example, an amount of the binder may be about 1 to about 50 parts, preferably in the range of 1 to 30, even more preferably in the range of 1 to 15, by weight based on 100 parts by weight of the negative active material.

According to an embodiment of the present invention, the negative electrode may further include at least one conductive agent selected from carbon black, acetylene black, ketjen black, carbon fiber, copper, nickel, aluminum, silver, conductive polymers, and their mixtures.

## BRIEF DESCRIPTION OF THE DRAWINGS

These and/or other aspects will become apparent and more readily appreciated from the following description of the embodiments, taken in conjunction with the accompanying drawings, in which:

FIG. 1 is a schematic view of a lithium battery according to an embodiment of the present invention;

FIG. 2 is a field emission scanning electron microscope (FE-SEM) image of the negative active material of Example 1, depicting the cross-sections of the spherical graphite particles of the base material of the negative active material;

FIGS. 3A and 3B are FE-SEM images of the negative active material of the coin cell manufactured according to Example 1 at different magnifications (FIG. 3A shows 500x magnification and FIG. 3B shows 5000x magnification);

FIGS. 4A and 4B are FE-SEM images of the negative active material of the coin cell manufactured according to Comparative Example 1 at different magnifications (FIG. 4A shows 500x magnification and FIG. 4B shows 5000x magnification);

FIG. 5 is a graph comparing the particle size distribution measurements of the negative active materials of the coin cells manufactured according to Example 1 and Comparative Example 1;

FIG. 6 is an X-ray diffraction pattern of the negative active material of the coin cell of Example 1 measured using a CuK$\alpha$ ray;

FIG. 7 is an X-ray diffraction pattern of the negative active material of the coin cell of Comparative Example 1 measured using a CuK$\alpha$ ray;

FIG. 8 is a graph comparing the volumetric expansion ratios of the negative electrodes of the coin cells manufactured according to Examples 1-3 and Comparative Example 1;

FIG. 9 is a graph comparing the charge-discharge efficiency (CDE) of the coin cells of Example 1 and Comparative Example 1;

FIG. 10 is a graph comparing the capacity retention ratios (CRR) of the coin cells of Example 1 and Comparative Example 1;

FIG. 11 is a graph comparing the charge-discharge capacities of the coin cells of Example 1 and Comparative Example 1;

FIG. 12 is a graph comparing the charge-discharge efficiencies (CDE) of the coin cells manufactured according to Examples 1 to 3;

FIG. 13 is a graph comparing the capacity retention ratios (CRR) of the coin cells of Examples 1 to 3; and

FIG. 14 is a graph comparing the charge-discharge capacities of the coin cells of Examples 1 to 3.

## DETAILED DESCRIPTION

Reference will now be made in detail to certain embodiments, examples of which are illustrated in the accompanying drawings, wherein like reference numerals refer to like elements throughout. In this regard, the presently described embodiments may be modified in different ways and should not be construed as being limited to the descriptions set forth herein. Accordingly, the embodiments are described below, with reference to the figures, to explain certain aspects of the present description.

A negative active material according to an embodiment of the present invention includes primary particles, which comprise: a substantially spherical carbonaceous base material, and silicon-based nanowires disposed on the carbonaceous base material, where the circularity of the particles of the carbonaceous base material is in the range of about 0.7 to about 1.0.

The carbonaceous base material is spherical, and the term "spherical," as used herein, means that at least a portion, preferably the whole content, of the carbonaceous base material has a gently or sharply curved external shape. The carbonaceous base material may have a completely spherical shape, or may have an incompletely spherical shape, or may have an oval shape. The carbonaceous base material may also have an uneven surface.

The degree of roundness of the carbonaceous base material may be confirmed by measuring the circularity thereof. As used herein, "circularity" refers to a measured value of how much the measured shape, which is a projected image of the carbonaceous base material, differs from a complete circle, the value ranging from 0 to 1. Thus, if the circularity is closer to 1, the measured shape is more circular. The circularity may be measured by using an FPIA 3000 apparatus, calculating an average value on a selection of randomly selected particles. According to an embodiment of the present invention, the circularity of the carbonaceous base material is in the range of about 0.7 to about 1, preferably in the range of, about 0.8 to about 1, more preferably in the range of about 0.9 to about 1.

The spherical carbonaceous base material may contribute to determining the shape of the primary particle, and compared to tabular, plate-shaped, or lump-shaped carbonaceous base materials, the presently described carbonaceous base material is not orientated in any particular direction even during its pressing (press-molding), and is thus suitable for high-rate discharge characteristics, low-temperature characteristics, or the like. Furthermore, the specific surface area of the carbonaceous base material is reduced with respect to the specific surface area of other carbonaceous base materials, and thus, its reactivity with the electrolytic solution is decreased with respect to the reactivity of said other carbonaceous materials. Thus, a lithium battery using the material according to the invention is believed to have improved cyclic characteristics.

The term "carbonaceous" base material refers here to a base material that includes at least about 50 wt% carbon. For example, the carbonaceous base material may include at least about 60 wt%, 70 wt%, 80 wt%, or 90 wt% carbon, or may include only carbon (100 wt% carbon).

According to an embodiment of the present invention, the carbonaceous base material may include a crystalline carbonaceous material as a carbon component. The crystalline carbonaceous material is chosen among the materials known from the one skilled in the art, as long as lithium ions are reversibly intercalated or deintercalated during charging and discharging. Preferably said crystalline carbonaceous material is such that the plane interval (d002) at the (002) X-ray diffraction plane of the crystalline carbonaceous base material is equal to or greater than about 0.333 nm and less than about 0.339 nm, more preferably, equal to or greater than about 0.335 nm and less than about 0.339 nm, even more preferably equal to or greater than about 0.337 nm and equal to or less than about 0.338 nm.

Non-limiting examples of the crystalline carbonaceous material are chosen from the group consisting of natural graphite, artificial graphite, expandable graphite, graphene, carbon black, fullerene soot, and combinations thereof. Natural graphite is graphite that was naturally formed, and examples thereof include flake graphite, high crystallinity graphite, microcrystalline or cryptocrystalline graphite, etc. Artificial graphite is graphite that was artificially synthesized, typically by heating amorphous carbon at high temperatures, and examples thereof include primary or electrographite, secondary graphite, graphite fibers, etc. Expandable graphite is graphite that was formed by intercalating a chemical material, such as an acid and/or an alkali, between graphite layers, followed by heating said modified graphite layer so that a layer of the molecular structure swells. Graphene refers to a single layer of graphite. Carbon black is a crystalline material that has a less regular structure than graphite. When carbon black is heated at a temperature of about 3,000°C for a long period of time, it is usually transformed into graphite. Fullerene soot refers to a carbon mixture including at least 3 wt% of fullerene (which is a polyhedron bundle that consists of 60 or more carbon atoms). The carbonaceous base material may include one of these crystalline carbonaceous materials or a combination of two or more thereof. For example, natural graphite may be included in order to easily increase the assembly density of the carbonaceous base material, usually while manufacturing the negative electrode.

The carbonaceous material may be subjected to any treatment as known from the one skilled in the art, preferably to a spheroidizing treatment in order to form a spherical carbonaceous base material (that is to say a carbonaceous base material comprising particles each having a substantially spherical shape). For example, a spherical carbonaceous base material obtained by a spheroidizing treatment of graphite may have a microstructure in which layered graphite may be gently or sharply curved, or may have a microstructure that contains a plurality of gently or sharply curved graphite scales, or a plurality of graphite thin films.

According to a preferred embodiment of the present invention, when the carbonaceous base material was formed in a spherical shape through the spheroidizing treatment, the carbonaceous base material may comprise pores therein. The pore(s) present inside the carbonaceous base material contributes advantageously to a decrease in the volumetric expansion of the silicon-based nanowires during charging and discharging. According to an embodiment of the present invention, the carbonaceous base material may have a porosity in the range of about 5 to about 30%, preferably in the range of about 10 to about 20%, based on the total volume of the carbonaceous base material. The porosity may be measured by using an ordinary porosimeter using mercury porosimetry.

The average particle size of the particles of the carbonaceous base material is not limited according to the invention. However, if the average particle size of the particles of the carbonaceous base material is too small, it is believed that reactivity with the electrolytic solution is too high, and thus, the cycle characteristics of the resulting lithium battery may be degraded. On the other hand, if the average particle size of the particles of the carbonaceous base material is too large, it is believed that the dispersion stability in preparing the negative electrode slurry is decreased and the resulting negative electrode may have a rough surface. Thus, the average particle diameter of the particles of the carbonaceous base material is usually in the range of about 1 to about 30 $\mu$m, preferably in the range of about 5 to about 25 $\mu$m, more preferably in the range of about 10 to about 20 $\mu$m. As used herein, the term "the average particle diameter" means a cumulative average particle diameter (D50) corresponding to 50 volume% in a cumulative particle size distribution curve based on a total volume of 100%. The D50 may be measured using one of various known methods in the art, for example, a particle size analyzer, or from a transmission electron microscopic (TEM) image or a scanning electron microscopic (SEM) image. Also, the D50 may be easily measured by analyzing data measured by a measuring device using a dynamic light-scattering method to count the number of particles for each particle size range and calculating an average value thereof.

Without wishing to be bound by any theory, it is believed that the carbonaceous base material functions as a support for fixing the silicon-based nanowires, thus suppressing the volumetric changes of the silicon-based nanowires that could occur during charging and discharging.

The silicon-based nanowires are disposed on the carbonaceous base material. In this regard, the term "silicon-based," as used herein, refers to the presence of at least about 50 wt% silicon (Si) in the material. For example, the silicon-based nanowires can include at least about 60 wt%, about 70 wt%, about 80 wt%, or about 90 wt% Si, or may include only Si (100 wt% Si) thus forming Si nanowires. In this regard, the term "nanowire," as used herein, refers to a wire structure (i.e. a substantially cylindrical structure having a great length:cross-section diameter ratio) having a nano-diameter cross-section. Usually, the nanowire has an average (cross-section) diameter in the range of about 10 to about 500 nm, and an average length in the range of about 0.1 to about 100 $\mu$m. The aspect ratio (length:width) of each nanowire is preferably of about 10 or more, more preferably of about 50 or more, even more preferably about 100 or more. The diameters of the nanowires may be substantially identical to or different one from the other, and from among the length of nanowires, at least a portion may be linear, gently or sharply curved, or branched. Such silicon-based nanowires are capable of withstanding volumetric changes in the lithium battery due to charging and discharging.

The silicon-based nanowires usually include a material chosen from the group consisting of Si, SiOx (0<x$\leq$2), Si-Z alloys (where Z is an alkali metal, an alkali earth metal, a Group 13 element, a Group 14 element, a Group 15 element, a Group 16 element, a transition metal, a rare earth element, or a combination thereof, and is not Si), or a combination thereof, but the material for forming the silicon-based nanowires is not limited thereto. The element Z may be selected from Mg, Ca, Sr, Ba, Ra, Sc, Y, La, Ti, Zr, Hf, V, Nb, Ta, Cr, Mo, W, Tc, Re, Fe, Ru, Os, Co, Rh, Ir, Ni, Pd, Pt, Cu, Ag, Au, Zn, Cd, B, Ge, P, As, Sb, Bi, S, Se, Te, Po, and combinations thereof. Furthermore, Si, SiO$_x$, and the alloy of Si and Z may include amorphous silicon, crystalline (including single or polycrystalline) silicon, or a combination thereof. The silicon-based nanowires may include these materials alone or in a combination. Silicon-based nanowires have advantageously a high capacity, in connection with the carbonaceous material. Si nanowires are preferably used in a preferred embodiment as the silicon-based nanowires, in consideration of their very high capacity.

The silicon-based nanowires may be manufactured by directly growing silicon-based nanowires which are disposed on the spherical carbonaceous base material, or by disposing, (for example, attaching or coupling) silicon-based nanowires, which have been grown separately, on to the carbonaceous base material. The silicon-based nanowires may be disposed on the spherical carbonaceous base material using any known placement methods. For example, the nanowires may be grown using a vapor-liquid-solid (VLS) growth method, or using a nano-sized catalyst that thermally decomposes a precursor gas present nearby. The silicon-based nanowires are preferably grown directly on the carbonaceous base material, more preferably in the presence of at least one metal catalyst preferably chosen from the group consisting of Pt, Fe, Ni, Co, Au, Ag, Cu, Zn, Cd, and their combinations.

The carbonaceous base material is generally present in the negative active material in an amount such that silicon-based nanowires are included in a sufficient amount in order to provide high capacity, and that volumetric changes in the silicon-based nanowires are substantially suppressed. Preferably, the amount of the carbonaceous base material is in the range of about 60 to about 99 wt%, and the amount of the silicon-based nanowires is in the range of about 1 to about 40 wt%, based on the total weight of the carbonaceous base material and the silicon-based nanowires.

The primary particles may agglomerate or otherwise combine with each other to form secondary particles, or may combine with other active components to form secondary particles.

According to an embodiment of the present invention, the negative active material may further include, (in addition to the primary particles of the invention), other carbonaceous particles including at least one of natural graphite, artificial graphite, expandable graphite, graphene, carbon black, fullerene soot, carbon nanotubes, carbon fiber and their mixtures. In this regard, said other carbonaceous particles may be included in a spherical, tabular, fibrous, tubular, and/or powder form. This means that several carbonaceous particles having different shapes can be present, the spherical ones according to the invention and other optional ones. For example, the carbonaceous particles may be added in their natural form (which may be spherical, - according to the invention if silicon-based nanowires are disposed thereon -, tabular, fibrous, tubular, and/or powder form) to the negative active material, or may be subjected to a treatment such as a partial spheroidizing treatment (as described above with respect to the carbonaceous base material of the primary particles) and then added in the treated form (as a partially spherical particle - according to the invention if they have a spherical shape and if silicon-based nanowires are disposed thereon -) to the negative active material. If the carbonaceous particles are added as spherical particles and if silicon-based nanowires are disposed thereon, they constitute the carbonaceous base material of the invention.

A lithium battery according to the present invention includes a negative electrode including the negative active material of the invention, as disclosed above, and a binder; a positive electrode facing the negative electrode; and an electrolyte disposed between the negative electrode and the positive electrode.

The negative electrode may include the negative active material. The negative electrode may be manufactured by various methods. For example, the negative active material, a binder, and optionally a conductive agent, are mixed in a solvent to prepare a negative active material composition, and then the negative active material composition is molded into a desired shape. In a preferred embodiment, the negative active material composition is applied on a current collector, such as a copper foil or the like.

The binder included in the negative active material composition and in the negative electrode aids bonding between the negative active material particles and the conductive agent, if present, and between the negative active material particles and the current collector, if present. An amount of the binder may be in the range of about 1 to about 50 parts by weight preferably in the range of about 1 to about 30 parts by weight, more preferably in the range of about 1 to about 20 parts by weight, and even more preferably in the range of about 1 to about 15 parts by weight, based on 100 parts by weight of the negative active material.

The binder is preferably chosen from the group consisting of polyvinylidenefluoride, polyvinylidenechloride, polybenzimidazole, polyimide, polyvinylacetate, polyacrylonitrile, polyvinylalcohol, carboxymethylcellulose (CMC), starch, hydroxypropylcellulose, regenerated cellulose, polyvinylpyrrolidone, tetrafluoroethylene, polyethylene, polypropylene, polystyrene, polymethylmethacrylate, polyaniline, acrylonitrile-butadienestyrene, phenol resin, epoxy resin, polyethylene terephthalate, polytetrafluoroethylene, polyphenylsulfide, polyamideimide, polyetherimide, polyethylenesulfone, polyamide, polyacetal, polyphenyleneoxide, polybutylene terephthalate, ethylene-propylene-diene terpolymer (EPDM), sulfonated EPDM, styrene butadiene rubber, fluoride rubber, and their combinations.

In a preferred embodiment, the negative electrode optionally further includes at least one conductive agent, in order to provide a conductive passage to the negative active material and to further improve electrical conductivity. As the conductive agent, any material known to the one skilled in the art to be used in lithium batteries may be used. The conductive agent can be chosen among carbonaceous materials, preferably chosen from the group consisting of carbon black, acetylene black, ketjen black, denka black, carbon fiber (for example, a vapor phase growth carbon fiber), or the like; metals, preferably chosen from the group consisting of copper, nickel, aluminum, silver, or the like, each of which being usually used in powder or fiber form; conductive polymers, preferably chosen from the group consisting of polyphenylene derivatives; and mixtures thereof. In a preferred embodiment, the conductive agent is chosen from the group consisting of carbon black, acetylene black, ketjen black, carbon fiber, copper, nickel, aluminum, silver, a conductive polymer, and their mixtures.

The amount of the conductive agent is chosen appropriately by the one skilled in the art. For example, the conductive agent may be added in such an amount that a weight ratio of the negative active material to the conductive agent is in the range of about 99:1 to about 90:10.

The solvent may be N-methylpyrrolidone (NMP), acetone, water, or the like. The amount of the solvent is generally of about 10 to about 100 parts by weight, based on 100 parts by weight of the negative active material. If the amount of the solvent is within this range, it is believed that the active material layer may be easily formed.

The current collector may have a thickness in the range of about 3 to about 500 $\mu$m. The current collector is chosen by the one skilled in the art so that it is conductive and it does not cause a chemical change in the battery. Non-limiting examples of materials for the current collector include copper, stainless steel, aluminum, nickel, titanium, calcined carbon, copper and stainless steel surface-treated with carbon, nickel, titanium, silver, or the like, alloys of aluminum and cadmium, etc. An uneven micro-structure may be formed on the surface of the current collector to enhance the binding force with the negative active material. The current collector may be take various forms including a film, a sheet, a foil, a net, a porous structure, a foam structure, a non-woven structure, etc.

The prepared negative active material composition may be directly coated on a current collector to form a negative electrode plate, or may be cast onto a separate support and then separated from the support and laminated on a current collector (such as a copper foil) to obtain a negative electrode plate.

In addition to being useful in the manufacture of a lithium battery, the negative active material composition may be printed on a flexible electrode substrate to manufacture a printable battery.

Separately, to manufacture a positive electrode, a positive active material composition is prepared by mixing a positive active material, a conductive agent, a binder, and a solvent.

As the positive active material, any lithium-containing metal oxide used in conventional lithium batteries may be used. For example, $LiCoO_2$, $LiMn_xO_{2x}$ (where x is 1 or 2), $LiNi_{1-x}Mn_xO_2$ (where 0<x<1), or $LiNi_{1-x-y}Co_xMn_yO_2$ (where $0{\leq}x{\leq}0.5$ and $0{\leq}y{\leq}0.5$), or the like may be used. For example, a compound that intercalates and/or deintercalates lithium, such as $LiMn_2O_4$, $LiCoO_2$ $LiNiO_2$, $LiFeO_2$, $V_2O_5$, TiS, MoS, or the like and their mixtures, may be used as the positive active material.

The conductive agent, the binder, and the solvent used in preparing the positive active material composition may be the same as those included in the negative active material composition. In some cases, a plasticizer may be further added to each of the positive active material composition and the negative active material composition to form pores in the corresponding electrode plate. Amounts of the positive active material, the conductive agent, the binder, and the solvent may be the same as used in conventional lithium batteries.

The positive electrode current collector may have a thickness in the range of about 3 to about 500 $\mu$m, and is chosen by the one skilled in the art so that it has high conductivity and it does not cause a chemical change in the battery. Non-limiting examples of the positive electrode current collector include stainless steel, aluminum, nickel, titanium, calcined carbon, and aluminum and stainless steel surface-treated with carbon, nickel, titanium, silver, or the like and their mixtures. The positive electrode current collector may have an uneven micro-structure at its surface to enhance the binding force with the positive active material. The positive current collector may be used in various forms including a film, a sheet, a foil, a net, a porous structure, a foam structure, a non-woven structure, etc.

The prepared positive active material composition may be directly coated on a positive electrode current collector to form a positive electrode plate, or may be cast onto a separate support, separated from the support and laminated on a positive electrode current collector to obtain a positive electrode plate.

The positive electrode is usually separated from the negative electrode by a separator. The separator may be any of various separators typically used in conventional lithium batteries. For example, the separator may include a material that has low resistance to the migration of ions of an electrolyte and good electrolyte-retaining capability. For example, the separator may include a material selected from glass fibers, polyester, Teflon, polyethylene, polypropylene, polytetrafluoroethylene (PTFE), and combinations thereof, each of which may be nonwoven or woven. The separator may have a pore size in the range of about 0.01 to about 10 $\mu$m, and a thickness in the range of about 5 to about 300 $\mu$m.

A lithium salt-containing non-aqueous based electrolyte is usually used and it generally includes a non-aqueous electrolyte and a lithium salt. Non-limiting examples of the non-aqueous electrolyte include non-aqueous electrolytic solutions, organic solid electrolytes, inorganic solid electrolytes, etc.

As the non-aqueous electrolytic solution, a non-protogenic organic solvent may be used, non-limiting examples of which include N-methyl-2-pyrrolidone, propylene carbonate, ethylene carbonate, butylene carbonate, dimethyl carbonate, diethyl carbonate, gamma-butyloractone, 1,2-dimethoxy ethane, tetrahydrofuran, 2-methyl tetrahydrofuran, dimethylsulfoxide, 1,3-dioxolane, formamide, dimethylformamide, acetonitrile, nitromethane, methyl formic acid, methyl acetic acid, phosphoric acid trimester, trimethoxy methane, dioxolane derivatives, sulfolanes, methyl sulfolanes, 1,3-dimethyl-2-imidazolidinone, propylene carbonate derivatives, tetrahydrofuran derivatives, ethers, methyl propionic acid, ethyl propionic acid, etc. or the like, and their mixtures.

Non-limiting examples of the organic solid electrolyte include polyethylene derivatives, polyethylene oxide derivatives, polypropylene oxide derivatives, phosphate ester polymers, polyester sulfide, polyvinyl alcohol, polyfluorinated vinylidene, polymers having an ionic dissociable group, etc., or the like, and their mixtures.

Non-limiting examples of the inorganic solid electrolyte include nitrides, halides, sulfides and silicates of Li, such as $Li_3N$, LiI, $Li_5Ni_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, or the like, and their mixtures.

The lithium salt may be any one of various lithium salts conventionally used in lithium batteries. Non-limiting examples of material that are dissolved in the non-aqueous electrolyte include LiCl, LiBr, LiI, $LiClO_4$, $LiBF_4$, $LiB_{10}Cl_{10}$,

$LiPF_6$, $LiCF_3CO_2$, $LiAsF_6$, $LiSbF_6$, $LiAlCl_4$, $CH_3SO_3Li$, $CF_3SO_3Li$, $CF_3SO_{2\ 2}NLi$, lithiumchloroborate, lower aliphatic carbonic acid lithium, 4 phenyl boric acid lithium, lithium imide, etc., and combinations thereof.

Lithium batteries may be categorized as lithium ion batteries, lithium ion polymer batteries, or lithium polymer batteries, depending on the separator and electrolyte used. Lithium batteries may also be categorized as cylindrical lithium batteries, square-shaped lithium batteries, coin-shaped lithium batteries, or pouch-shaped lithium batteries, depending on their shape. Lithium batteries may also be categorized as bulk-type lithium batteries or thin layer-type lithium batteries, depending on their size. The lithium batteries may also be primary batteries or secondary batteries.

Methods of manufacturing lithium batteries are known to those of ordinary skill in the art.

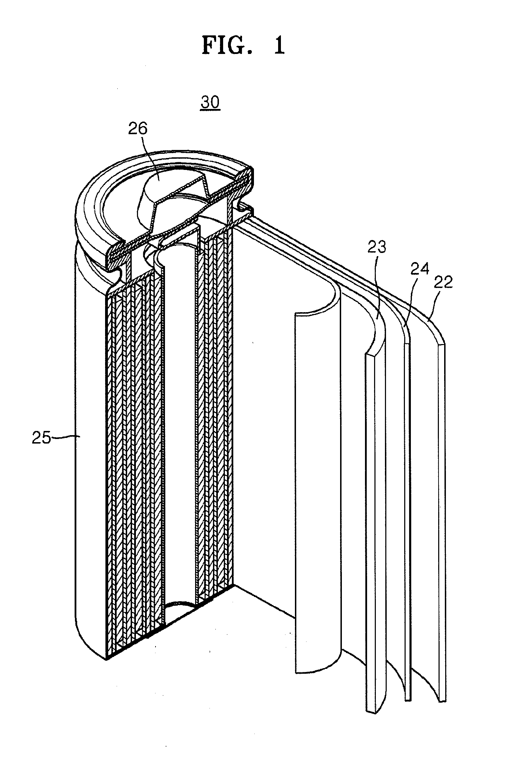

FIG. 1 is a schematic view of a lithium battery 30 according to the present invention. Referring to FIG. 1, the lithium battery 30 includes a positive electrode 23, a negative electrode 22, and a separator 24 between the positive electrode 23 and the negative electrode 22. The positive electrode 23, the negative electrode 22, and the separator 24 are wound or folded and housed in a battery case 25. Then, an electrolyte is injected into the battery case 25, and the battery case 25 is sealed with an encapsulation member 26, thereby completing the manufacture of the lithium battery 30. The battery case 25 as illustrated in FIG. 1, is cylindrical but it can also be rectangular, or thin film type. The lithium battery 30 is a lithium ion battery.

The lithium batteries according to the present invention may be used in any application, such as electric vehicles, that require high capacity, high power output, and high-temperature driving. In addition, the lithium batteries according to the present invention may be used in mobile phones or portable computers. The lithium batteries may be combined with existing internal-combustion engines, fuel cells, super capacitors, or the like, for use in hybrid vehicles, or the like. Furthermore, the lithium batteries may be used in any other applications that require high power output, high voltage, and high-temperature driving.

Hereinafter, exemplary embodiments of the present invention will be described in detail with reference to certain examples. However, these examples are presented for illustrative purpose only and do not limit the scope of the present invention.

## Example 1

Si nanowires (SiNWs) were grown on spherical graphite by vapor-liquid-solid (VLS) growth. As the spherical graphite, spherical natural graphite (Hitachi Chemical Company) having an average diameter of about 10 $\mu$m was used. First, Ag seeds were formed on the surface of the spherical natural graphite by using a solution containing ionized Ag, and $SiH_4$ gas was supplied thereto at a rate of 0.2 L/min based on 10 L chamber for 10 minutes at a temperature of 500°C or greater to grow the SiNWs, thereby completing the preparation of negative active material primary particles. The spherical graphite particles thus obtained were randomly collected, and then the circularity thereof was measured using a FPIA-3000 apparatus. The circularity was 0.808 to 1.000. The measured circularity values of the spherical graphite are as follows:

Circularity: 0.808, 0.844, 0.861, 0.878, 0.879, 0.883, 0.884, 0.888, 0.891, 0.892, 0.907, 0.908, 0.913, 0.914, 0.916, 0.918, 0.922, 0.923, 0.924, 0.928, 0.929, 0.934, 0.935, 0.937, 0.938, 0.939, 0.942, 0.943, 0.946, 0.946, 0.947, 0.948, 0.949, 0.952, 0.956, 0.959, 0.961, 0.962, 0.963, 0.963, 0.963, 0.964, 0.964, 0.966, 0.967, 0.967, 0.970, 0.972, 0.976, 0.977, 0.977, 0.977, 0.979, 0.979, 0.982, 0.983, 0.984, 0.986, 0.990, 0.994, 0.995, 0.996, 1.000, 1.000

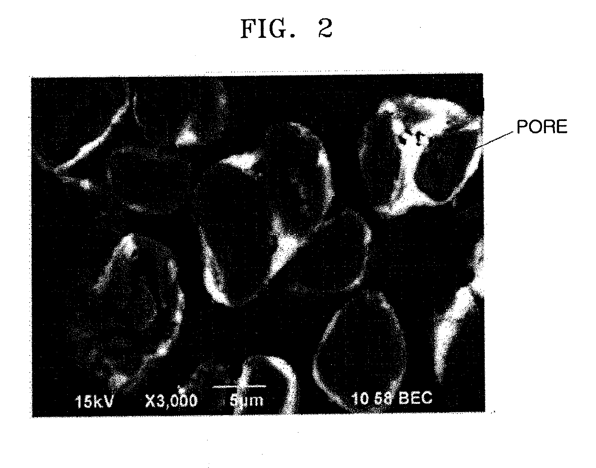

Furthermore, FIG. 2 is a field emission scanning electron microscope (FE-SEM) image of the cross-sections of the spherical graphite particles. As shown in FIG. 2, it was confirmed that pores were formed inside the spherical graphite, and the porosity of the spherical graphite was about 15 vol% based on the total volume thereof. Moreover, the grown SiNWs had an average diameter of about 30 nm to about 50 nm, an average length of about 1.5 $\mu$m, and the amount of SiNWs was 7.15 wt%, based on the total weight of the spherical graphite particles and the SiNWs.

The prepared negative active material and LSR7 (Hitachi Chemical, a binder that consists of polyamideimide (PAI) and N-methyl-2-pyrrolidone) as a binder were mixed in a weight ratio of 90:10, and then N-methylpyrrolidone was added thereto to control the viscosity thereof until the solids content thereof reached 60 wt%, thereby completing preparation of a negative active material slurry. The prepared slurry was coated on a copper foil current collector having a thickness of 10 $\mu$m to manufacture a negative electrode plate. The completely coated electrode plate was dried at a temperature of 120°C for 15 minutes, followed by pressing, thereby completing the manufacture of a negative electrode having a thickness of 60 $\mu$m. Li metal as a reference electrode, and a polyethylene separator having a thickness of 20 $\mu$m (product name: STAR 20, Asahi) were used, and an electrolyte was injected thereto. The resultant structure was pressed to complete the manufacture of a 2016R type coin cell. The electrolyte was 1.10 M $LiPF_6$ dissolved in a mixed solvent of ethylene carbonate (EC), ethylmethyl carbonate (EMC), and diethyl carbonate (DEC) at a volumetric ratio of EC:EMC:DEC of 3:3:4.

### Example 2

A coin cell was manufactured in the same manner as Example 1, except that in preparing the negative active material slurry, denka black was further added as a conductive agent in an amount such that a weight ratio of the negative active material and the conductive agent was 96:4.

### Example 3

A coin cell was manufactured in the same manner as Example 1, except that in preparing the negative active material slurry, a vapor growth carbon fiber (VGCF) was further added as a conductive agent in an amount such that a weight ratio of the negative active material and the conductive agent was 92:8.

### Example 4

A negative active material and a coin cell were manufactured in the same manner as Example 1, except that spherical graphite manufactured by Nippon Graphite Industry Company was used to grow the SiNWs. The spherical graphite particles were randomly collected and their circularity was measured. The circularity was 0.778 to 1.000. The measured circularity values of the spherical graphite are as follows.

Circularity: 0.778, 0.791, 0.820, 0.861, 0.865, 0.867, 0.868, 0.884, 0.886, 0.903, 0.907, 0.914, 0.916, 0.916, 0.918, 0.920, 0.921, 0.933, 0.935, 0.937, 0.943, 0.943, 0.950, 0.958, 0.966, 0.967, 0.967, 0.972, 0.972, 0.976, 1.000, 1.000.

The graphite had an average particle size of 17 $\mu$m and an interior porosity of 25 vol%.

### Comparative Example 1

A negative active material and a coin cell were manufactured in the same manner as Example 1, except that lump-shaped graphite manufactured by Timcal Company was used to grow the SiNWs. The lump-shaped graphite was planar-shaped, and the circularity thereof was 0.581 to 0.697. The measured circularity values of the lump-shaped graphite are as follows.

Circularity: 0.581, 0.587, 0.616, 0.618, 0.638, 0.643, 0.643, 0.646, 0.647, 0.647, 0.658, 0.659, 0.663, 0.663, 0.663, 0.672, 0.674, 0.677, 0.689, 0.693, 0.694, 0.697, 0.697.

### Comparative Example 2

A negative active material and a coin cell were manufactured in the same manner as Example 1, except that artificial graphite manufactured by Hitachi Chemical Company was used to grow the SiNWs. The artificial graphite was lump-shaped, and the circularity thereof was 0.510 to 0.694. The measured circularity values of the artificial graphite are as follows.

Circularity: 0.510, 0.518, 0.528, 0.537, 0.537, 0.537, 0.571, 0.578, 0.585, 0.602, 0.602, 0.602, 0.602, 0.605, 0.613, 0.622, 0.636, 0.637, 0.644, 0.644, 0.644, 0.644, 0.644, 0.644, 0.644, 0.653, 0.655, 0.663, 0.665, 0.672, 0.674, 0.674, 0.674, 0.676, 0.683, 0.684, 0.684, 0.685, 0.685, 0.685, 0.686, 0.686, 0.689, 0.690, 0.691, 0.692, 0.692, 0.694.

**Negative active material analysis**

**Evaluation Examples 1 and 2: Analysis of FE-SEM images of negative active materials**

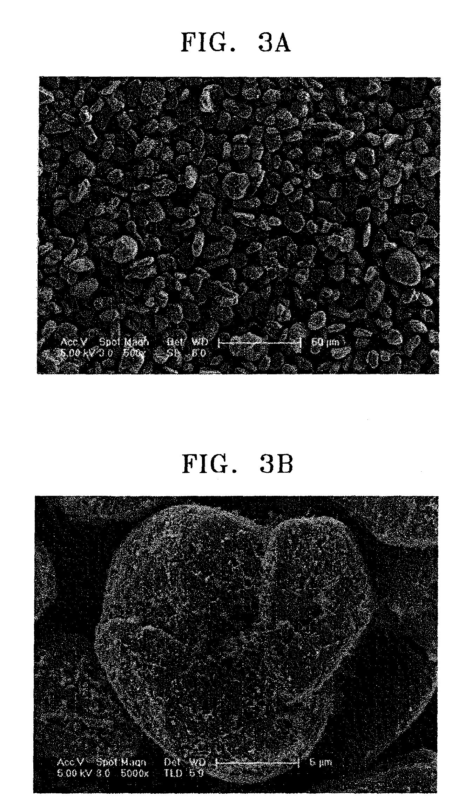

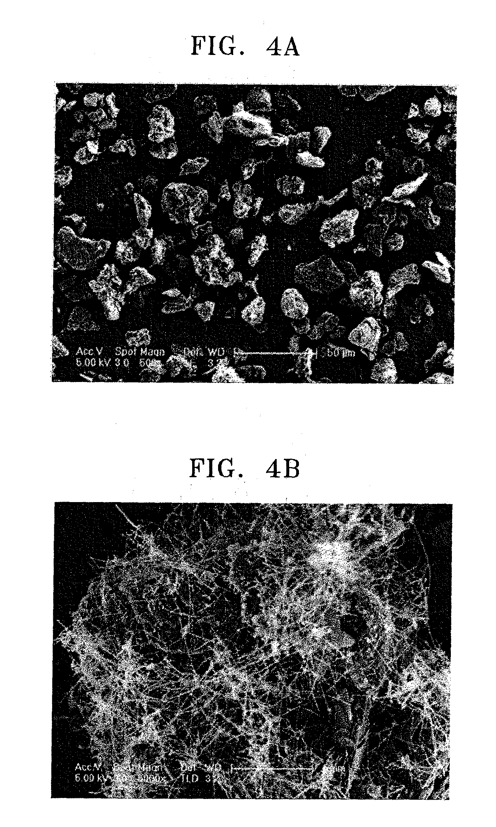

FIGS. 3A-3B, and FIGS. 4A-4B show enlarged FE-SEM images of the negative active materials used in the coin cells manufactured according to Example 1 and Comparative Example 1, respectively.

As shown in FIGS. 3A and 3B, the Si nanowires of the negative active material used in Example 1 were uniformly grown on the spherical graphite. As shown in FIGS. 4A and 4B, the Si nanowires of the negative active material used in Comparative Example 1 were randomly grown on the planar graphite, and thus, the distribution of the Si nanowires was not uniform.

**Evaluation Example 3: Analysis of particle distribution of negative active materials**

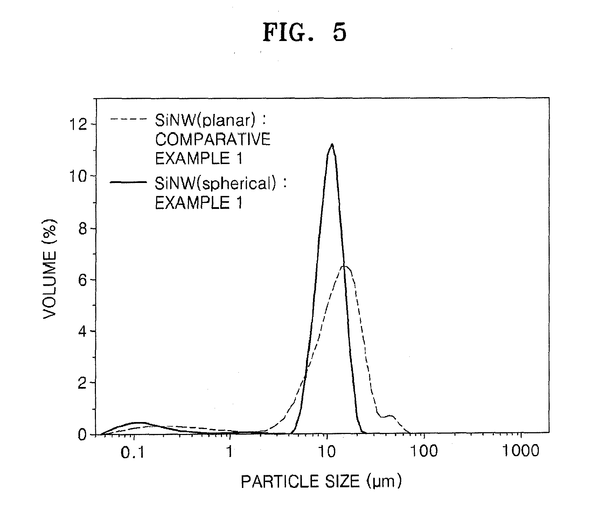

The particle distributions of the negative active materials used in the coin cells of Example 1 and Comparative Example 1 were measured using a particle distribution analyzer (Counter, Beckmann Coulter, Inc.), and the results thereof are shown in Table 1 below and FIG. 5.

Table 1

| | Negative active material | D10 | D50 | D90 |
|---|---|---|---|---|
| Example 1 | SiNW (spherical) | 6.31 | 10.7 | 15.8 |
| Comparative Example 1 | SiNW (planar) | 6.8 | 14.8 | 26.6 |
| | | 4.27 | 13.2 | 25.1 |

As shown in Table 1 and FIG. 5, the negative active material used in Comparative Example 1 (in which a planar graphite was used as the base material) had a random particle distribution and a wide distribution width. On the other hand, the negative active material used in Example 1 (in which spherical graphite was used as the base material) had a narrow distribution width and a relatively uniform size.

**Evaluation Example 4: Evaluation of XRD of negative active materials**

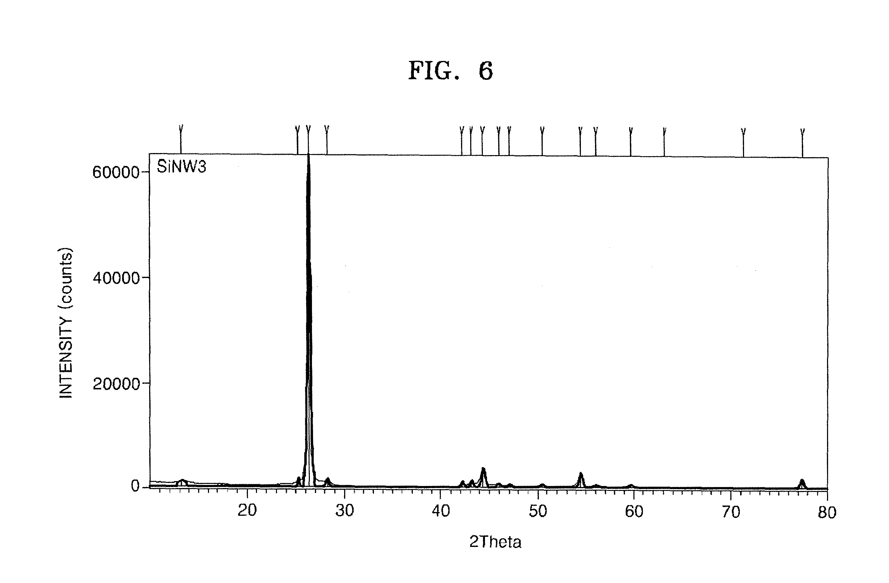

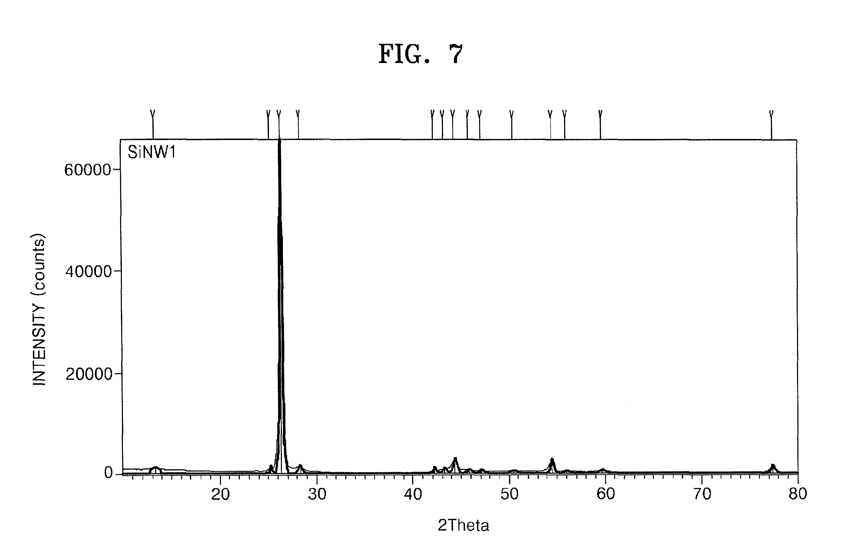

X-ray diffraction patterns of the negative active materials used in the coin cells of Example 1 and Comparative Example 1 were obtained using a CuK$\alpha$ ray, and the results thereof are shown in FIGs. 6 and 7 and Table 2 below.

Table 2

| | Negative active material | Theta | d-spacing | FWHM | T |
|---|---|---|---|---|---|
| Example 1 | SiNW (spherical) | 26.3452 | 3.38 | 0.307 | 26.58 |
| Comparative Example 1 | SiNW (planar) | 26.3782 | 3.37 | 0.2558 | 31.90 |

The XRD data shows that the negative active materials of Example 1 and Comparative Example 1 have a crystal structure due to the graphite used as the base material.

**Evaluation of Cell Properties**

**Evaluation Example 5: Electrode volumetric expansion ratio measurements**

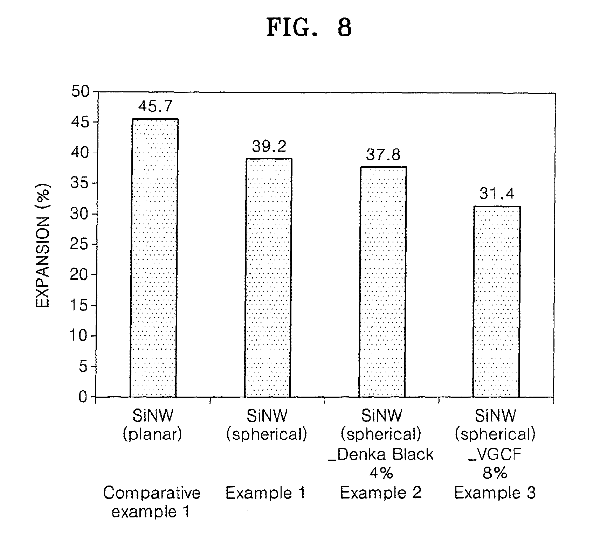

The coin cells of Examples 1-3 and Comparative Example 1 were charged (formation) at a current of 0.05 C, and then the coin cells were disassembled to compare the thickness of the negative electrode plate before and after charging, and the volumetric expansion ratio of the negative electrodes of the coin cells was measured. The results thereof are shown in FIG. 8.

As shown in FIG. 8, when spherical graphite was used as the base material (Examples 1-3), the volumetric expansion ratio of the SiNW negative active materials was reduced as compared to when planar graphite was used as the base material (Comparative Example 1). Moreover, due to the inclusion of a conductive agent, the decrease in the volumetric expansion ratio was further enhanced.

**Evaluation Example 6: Charging and discharging tests**

The coin cells of Examples 1-3 and Comparative Example 1 were charged at a current of 40 mA per 1 g of a negative active material until the voltage reached 0.001 V (vs. Li), and then discharged with the same amplitude of current until the voltage reached 3 V (vs. Li). Then, within the same current and voltage ranges, charging and discharging were repeated 50 times.

This charging and discharging test was performed at room temperature (25°C). Initial coulombic efficiency (ICE) is defined according to Equation 1 below. Charge-discharge efficiency (CDE) is defined according to Equation 2 below. Capacity retention ratio (CRR) is defined according to Equation 3 below.

## Equation 1

ICE [%]=[discharging capacity in the 1$^{st}$ cycle/charging capacity in the 1$^{st}$ cycle]×100

## Equation 2

CDE [%]=[discharging capacity in each cycle/ charging capacity in the same cycle]×100

## Equation 3

CRR [%]=[discharging capacity in each cycle/ discharging capacity in the first cycle]×100

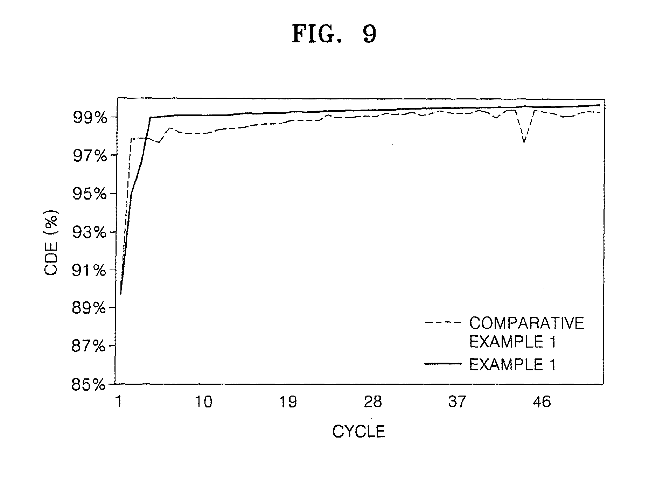

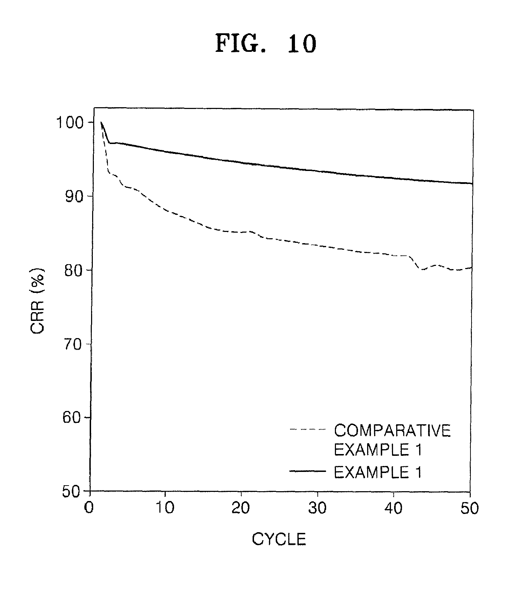

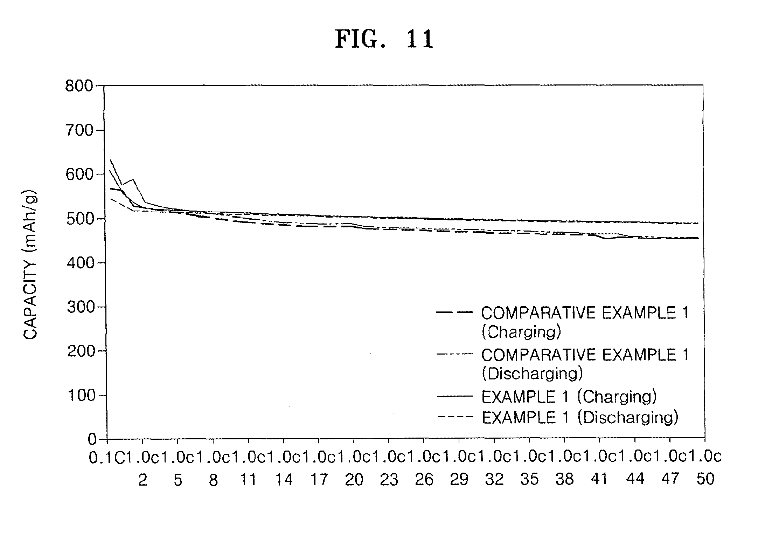

To compare the charge and discharge effect obtained by using spherical graphite as the base material for the SiNW active materials, the CED data of the coin cells of Example 1 and Comparative Example 1 is illustrated in FIG. 9, the CRR data is illustrated in FIG. 10, and the charge-discharge capacity data is illustrated in FIG.11. The respective data are shown in Table 3 below.

Table 3

| | Negative active material | Initial capacity (mAh/g) | | ICE(%) | CDE(%):50 cycles | CRR(%):50 cycles | Expansion ratio (%) |
| --- | --- | --- | --- | --- | --- | --- | --- |
| | | Charging | Discharging | | | | |
| Example 1 | SiNW (spherical) | 608 | 546 | 89.7 | 99.7 | 92.0 | 39.2 |
| Comparative Example 1 | SiNW (planar) | 633 | 567 | 89.7 | 99.3 | 80.4 | 45.7 |

As shown in the results above, when spherical graphite was used as the base material (Example 1), the rate characteristics and lifespan characteristics of the SiNW negative active material were improved compared to when planar graphite was used as the base material (Comparative Example 1).

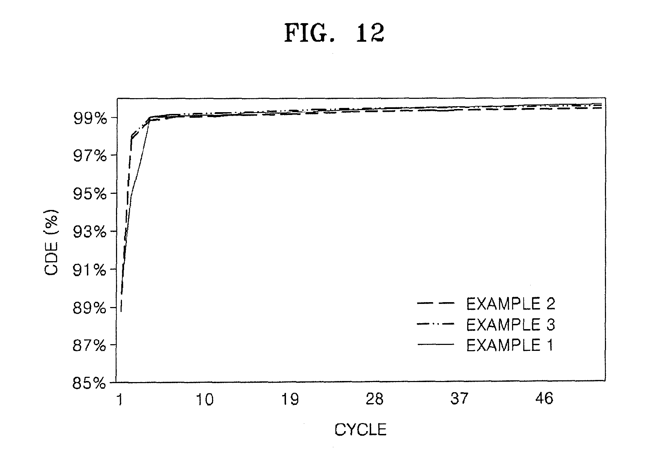

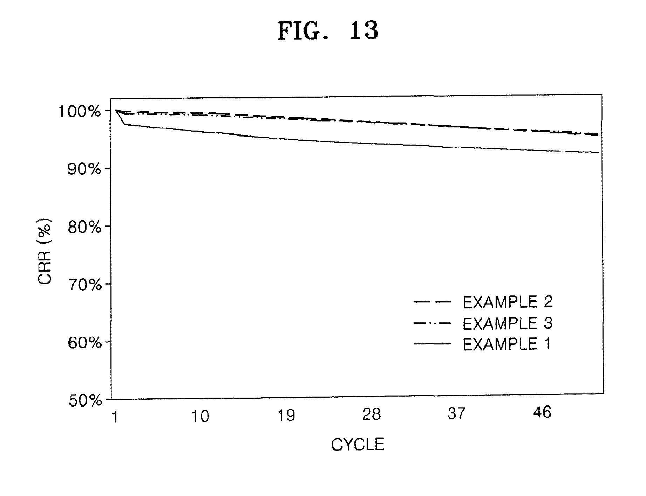

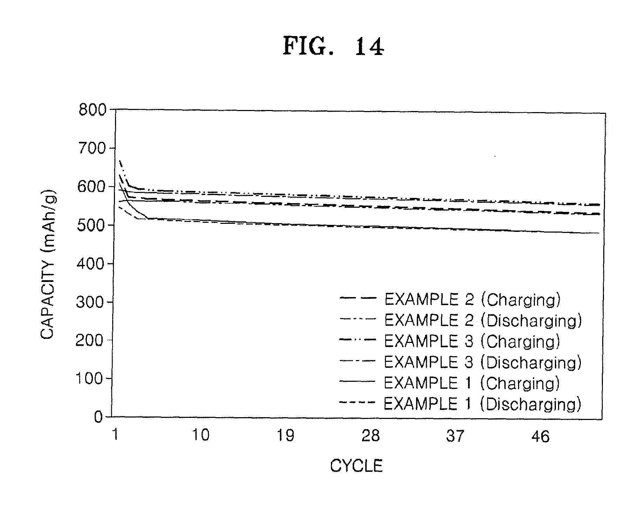

Furthermore, to compare the charge and discharge effect obtained by adding a conductive agent to the SiNW negative active material that uses spherical graphite as the base material, the charge-discharge efficiency (CDE) measurement results of the coin cells of Examples 1-3 are shown in FIG. 12, the capacity retention ratio (CRR) measurement results of the coin cells of Examples 1-3 are shown in FIG. 13, and the charge-discharge capacity measurement results of the coin cells of Examples 1-3 are shown in FIG. 14. The respective data are shown in Table 4 below.

Table 4

| | Negative active material | Initial capacity (mAh/g) | | ICE (%) | CDE (%):50 cycles | CRR (%):50 cycles | Expansion ratio (%) |
| --- | --- | --- | --- | --- | --- | --- | --- |
| | | Charge | Discharge | | | | |
| Ex. 1 | SiNW (spherical) | 608 | 546 | 89.7 | 99.7 | 92.0 | 39.2 |
| Ex. 2 | SiNW(spherical)+Denka Black 4% | 630 | 560 | 88.9 | 99.6 | 95.31 | 37.8 |
| Ex. 3 | SiNW(spherical)+VGCF 8% | 666 | 591 | 88.8 | 99.5 | 95.80 | 31.4 |

As shown above, it is confirmed that due to the addition of a conductive agent in the SiNW negative active material using spherical graphite as the base material, the rate characteristics and lifespan characteristics of the coin cells were further improved.

As described above, the negative active materials according the embodiments of the present invention have been proven to compensate for an irreversible capacity loss caused by volumetric expansion/contraction during charging or discharging of a lithium battery, and to improve the cycle lifespan characteristics of the lithium battery.

While certain embodiments have been illustrated and described, those of ordinary skill in the art understand that various modifications can be made to the described embodiments without departing from the spirit and scope of the present invention, as defined by the following claims.

**Claims**

1. A negative active material comprising a primary particle comprising:

   a substantially spherical carbonaceous base material, the carbonaceous base material having a circularity in the range of 0.7 to 1.0, preferably in the range of 0.8 to 1.0, more preferably in the range of 0.9 to 1.0, and silicon-based nanowires disposed on the carbonaceous base material.

2. The negative active material of claim 1, wherein the particles of the carbonaceous base material comprise pores therein and have a porosity in the range of 5 to 30%, preferably in the range of 10% to 20%, based on the total volume of the carbonaceous base material.

3. The negative active material according to any one of claims 1 and 2, wherein the carbonaceous base material comprises a crystalline carbonaceous material, preferably chosen from the group consisting of natural graphite, artificial graphite, expandable graphite, graphene, carbon black, fullerene soot, and their mixtures.

4. The negative active material according to claim 3, wherein the plane interval (d002) of the (002) X-ray diffraction plane of the crystalline carbonaceous base material is equal to or greater than 0.333 nm and less than 0.339 nm, preferably equal to or greater than 0.335 nm and less than 0.339 nm, more preferably equal to or greater than 0.337 nm and equal to or less than 0.338 nm.

5. The negative active material according to any one of claims 1 to 4, wherein the average particle diameter of the carbonaceous base material is in the range of 1 to 30 $\mu$m, preferably in the range of 5 to 25 $\mu$m, more preferably in the range of 10 to 20 $\mu$m.

6. The negative active material according to any one of claims 1 to 5, wherein the silicon-based nanowires comprise a material chosen from the group consisting of Si, SiOx (0<x≤2), Si-Z alloys, wherein Z is an alkali metal, an alkali earth metal, a Group 13 element, a Group 14 element, a Group 15 element, a Group 16 element, a transition metal, a rare earth element, or a combination thereof, and Z is not Si, preferably the silicon-based nanowires are Si-nanowires.

7. The negative active material according to any one of claims 1 to 6, wherein the silicon-based nanowires have an average diameter in the range of 10 to 500 nm and an average length in the range of 0.1 to 100 $\mu$m, and preferably a length:width ratio of each nanowire of 10 or more, preferably 50 or more, more preferably 100 or more.

8. The negative active material according to any one of claims 1 to 7, wherein the silicon-based nanowires are grown directly on the carbonaceous base material, preferably in the presence of at least one metal catalyst preferably chosen from the group consisting of Pt, Fe, Ni, Co, Au, Ag, Cu, Zn, Cd, and their combinations.

9. The negative active material according to any one of claims 1 to 8, wherein an amount of the carbonaceous base material is in the range of 60 to 99 wt%, and an amount of the silicon-based nanowires is in the range of 1 to 40 wt%, based on the total weight of the carbonaceous base material and the silicon-based nanowires.

10. The negative active material according to any one of claims 1 to 9, further comprising other carbonaceous particles comprising at least one of natural graphite, artificial graphite, expandable graphite, graphene, carbon black, fullerene soot, carbon nanotubes, carbon fibers and their mixtures.

11. The negative active material according to claim 10, wherein the other carbonaceous particles are in a spherical, planar, fibrous, tubular, and/or powder form.

12. A lithium battery (30) comprising:

   a negative electrode (22) comprising the negative active material of any one of claims 1 to 11, and a binder;
   a positive electrode (23) facing the negative electrode (22); and

a separator (24) between the negative electrode and the positive electrode.

13. The lithium battery (30) according to claim 12, wherein the binder comprises at least one of polyvinylidenefluoride, polyvinylidenechloride, polybenzimidazole, polyimide, polyvinylacetate, polyacrylonitrile, polyvinylalcohol, carboxymethylcellulose (CMC), starch, hydroxypropylcellulose, regenerated cellulose, polyvinylpyrrolidone, tetrafluoroethylene, polyethylene, polypropylene, polystyrene, polymethylmethacrylate, polyaniline, acrylonitrile-butadiene-styrene, phenol resin, epoxy resin, polyethylene terephthalate, polytetrafluoroethylene, polyphenylsulfide, polyamideimide, polyetherimide, polyethylenesulfone, polyamide, polyacetal, polyphenyleneoxide, polybutylene terephthalate, ethylene-propylene-diene terpolymer (EPDM), sulfonated EPDM, styrene butadiene rubber, fluoride rubber, and their combinations.

14. The lithium battery (30) according to any one of claims 12 and 13, wherein an amount of the binder is in the range of 1 to 50 parts by weight, preferably in the range of 1 to 30, more preferably in the range of 1 to 20, even more preferably in the range of 1 to 15, based on 100 parts by weight of the negative active material.

15. The lithium battery (30) according to any one of claims 12 to 14, wherein the negative electrode (22) further comprises at least one conductive agent selected from carbon black, acetylene black, ketjen black, carbon fiber, copper, nickel, aluminum, silver, conductive polymers, and their mixtures.

# FIG. 1

FIG. 2

FIG. 3A

FIG. 3B

FIG. 4A

FIG. 4B

# FIG. 5

FIG. 6

# FIG. 7

EP 2 579 366 A1

# FIG. 8

# FIG. 9

# FIG. 10

FIG. 11

EP 2 579 366 A1

FIG. 12

# FIG. 13

FIG. 14

Europäisches
Patentamt

European
Patent Office

Office européen
des brevets

# EUROPEAN SEARCH REPORT

**Application Number**

EP 12 18 7435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/037919 A1 (G4 SYNERGETICS INC [US]; WEST JON K [US]; WEST DANIEL J [US]; REGALADO) 31 March 2011 (2011-03-31) * paragraphs [0095] - [0096]; figure 19 * ----- | 1-15 | INV. H01M4/134 H01M4/133 |
| A | KHOMENKO ET AL: "Lithium-ion batteries based on carbon-silicon-graphite composite anodes", JOURNAL OF POWER SOURCES, ELSEVIER SA, CH, vol. 165, no. 2, 28 February 2007 (2007-02-28), pages 598-608, XP005914502, ISSN: 0378-7753, DOI: 10.1016/J.JPOWSOUR.2006.10.059 * the whole document * ----- | 1-15 | |
| A | WO 2011/060024 A2 (AMPRIUS INC [US]; BERDICHEVSKY EUGENE M [US]; HAN SONG [US]; CUI YI [U) 19 May 2011 (2011-05-19) * claims 1-20 * ----- | 1-15 | |

**TECHNICAL FIELDS SEARCHED (IPC)**

H01M

The present search report has been drawn up for all claims

| Place of search | Date of completion of the search | Examiner |
|---|---|---|
| The Hague | 21 January 2013 | Kiliaan, Sven |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 12 18 7435

This annex lists the patent family members relating to the patent documents cited in the above-mentioned European search report.
The members are as contained in the European Patent Office EDP file on
The European Patent Office is in no way liable for these particulars which are merely given for the purpose of information.

21-01-2013

| Patent document cited in search report | Publication date | Patent family member(s) | Publication date |
|---|---|---|---|
| WO 2011037919 A1 | 31-03-2011 | CA 2771969 A1 | 31-03-2011 |
| | | CN 102549814 A | 04-07-2012 |
| | | EP 2481110 A1 | 01-08-2012 |
| | | KR 20120069730 A | 28-06-2012 |
| | | US 2011070488 A1 | 24-03-2011 |
| | | WO 2011037919 A1 | 31-03-2011 |
| WO 2011060024 A2 | 19-05-2011 | US 2011111296 A1 | 12-05-2011 |
| | | WO 2011060024 A2 | 19-05-2011 |

EPO FORM P0459

For more details about this annex : see Official Journal of the European Patent Office, No. 12/82